# EUROPEAN PATENT APPLICATION

(11) **EP 4 815 144 A1**
(43) Date of publication of application: **30.09.2026**
(21) Application number: 25767161.0
(22) Date of filing: 12.02.2025
(51) Int. Cl.: H01M 50/242, H01M 50/249

(54) **BATTERY AND ELECTRIC DEVICE**

(30) Priority: 05.03.2024 CN 202420427897 U
(71) Applicant: Contemporary Amperex Technology Co., Limited, Ningde, Fujian 352100 (CN)
(72) Inventor: KE, Qingpeng, Ningde, Fujian 352100 (CN); MIAO, Huimin, Ningde, Fujian 352100 (CN); WEI, Jie, Ningde, Fujian 352100 (CN); PAN, Xin, Ningde, Fujian 352100 (CN)
(74) Representative: Ran, Handong
(86) International application number: PCT/CN2025/077041
(87) International publication number: WO 2025/185418

(57) **Abstract**

A battery and an electric device. The battery comprises a case and a bottom protective plate, wherein the bottom protective plate is connected to the case, the bottom protective plate is of a multi-layer structure, and a buffer cavity is formed between the bottom protective plate and the case and/or between two adjacent layers of the bottom protective plate. The battery structure can effectively improve the reliability of the battery.

## Description

### CROSS-REFERENCE TO RELATED APPLICATIONS

The present application claims priority to Chinese Patent Application No. 202420427897.5, filed on March 05, 2024 and entitled "BATTERY AND POWER CONSUMING APPARATUS", which is incorporated herein by reference in its entirety.

### TECHNICAL FIELD

The present application relates to the field of battery technologies, and specifically, to a battery and a power consuming apparatus.

### BACKGROUND

Energy conservation and emission reduction are the key to the sustainable development of the automobile industry. Electric vehicles, with their advantages of energy conservation and environmental protection, have emerged as an important component for the sustainable development of the automobile industry. For the electric vehicles, battery technologies are an important factor related to development of the electric vehicles.

In the development of battery technology, how to improve the reliability of the batteries is an urgent technical problem to be solved in the battery technology.

### SUMMARY

The present application provides a battery and a power consuming apparatus. The technical solution provided in the present application can effectively improve the reliability of the battery.

According to a first aspect, the present application provides a battery. The battery includes a case and a bottom protective plate. The bottom protective plate is connected to the case. The bottom protective plate is of a multi-layer structure, and a buffer cavity is formed between the bottom protective plate and the case and/or between two adjacent layers of the bottom protective plate.

In the foregoing solution, by disposing the buffer cavity, an impact on the bottom of the battery can be effectively relieved, and a risk that a battery cell in the case is damaged is reduced, so that the battery is highly reliable.

According to some embodiments of the present application, the bottom protective plate includes a first protective layer, a metal layer, and a second protective layer that are stacked, the first protective layer is disposed on a side of the metal layer close to the case, and the second protective layer is disposed on a side of the metal layer facing away from the case.

In the foregoing solution, the metal layer has a relatively high strength, and can provide effective protection for the battery cell in the case. By disposing the metal layer between the first protective layer and the second protective layer, a risk that the metal layer is exposed to the outside and is corroded can be effectively reduced, so that the bottom protective plate has relatively high reliability, thereby improving reliability of the battery.

According to some embodiments of the present application, at least one of the following conditions is met:
the buffer cavity is formed between the first protective layer and the case;
the buffer cavity is formed between the first protective layer and the metal layer; and
the buffer cavity is formed between the metal layer and the second protective layer.

In the foregoing solution, various positions for arranging the buffer cavity are provided, which can provide various options for manufacturing of the battery and adapt to different impact situations. For example, the buffer cavity is disposed between the first protective layer and the case, so that after the second protective layer, the metal layer, and the first protective layer absorb an impact first, the buffer cavity is used for energy absorption during collapse and deformation. Therefore, when a relatively small impact situation is encountered, a risk that the entire bottom protective plate is scraped because the buffer cavity is broken or broken into pieces can be reduced. For example, the buffer cavity is disposed between the metal layer and the second protective layer, so that impact can be absorbed at an outer position of the battery, and influence of the impact on the internal structure of the case can be effectively reduced.

According to some embodiments of the present application, the first protective layer includes a first body and a first flange portion, the first flange portion is disposed around the first body, and the first flange portion is connected to the case. At least a part of the first body protrudes from the first flange portion in a direction facing away from the case, and the buffer cavity is formed between the first body and the case.

According to the foregoing solution, the first protective layer has a simple structure, and can be effectively connected to the case by using the first flange portion. By disposing at least a part of the first body to protrude toward a side facing away from the case, a recessed region can be formed on a side facing the case, so as to form a buffer cavity between the case and the first protective layer, thereby relieving impact on the bottom of the battery, and enabling the battery to have relatively high reliability.

According to some embodiments of the present application, the metal layer includes a second body and a second flange portion, the second flange portion is disposed around the second body, at least a part of the second body protrudes from the second flange portion in the direction facing away from the case, the second body is attached to the first body, and the second flange portion is attached to the first flange portion.

In the foregoing solution, an outer contour of the metal layer may fit with an outer contour of the first protective layer, and the metal layer includes a second flange portion corresponding to the first flange portion, and a second body corresponding to the first body. The metal layer and the first protective layer can be closely attached to each other, and the bottom protective plate can have a stable structure and high space utilization, so that space utilization of the battery is high, facilitating improvement in the volumetric energy density of the battery.

According to some embodiments of the present application, the second protective layer includes a third body and a third flange portion, the third flange portion is disposed around the third body, at least a part of the third body protrudes from the third flange portion in the direction facing away from the case, the second body is sandwiched between the first body and the third body, and the second flange portion is sandwiched between the first flange portion and the third flange portion.

In the foregoing solution, the outer contour of the metal layer may fit with the outer contour of the first protective layer and the outer contour of the metal layer. By disposing the third body attached to the second body and the third flange portion attached to the second flange portion, in one aspect, the bottom protective plate can have a stable structure and high space utilization, so that space utilization of the battery is high, facilitating improvement in the volumetric energy density of the battery. In the other aspect, the metal layer can be stably located between the first protective layer and the second protective layer, thereby reducing a risk that the metal layer is corroded and improving reliability of the battery.

According to some embodiments of the present application, the second flange portion is provided with a first through-hole, the bottom protective plate further includes a first protective portion, the first protective portion is disposed in the first through-hole and connects the first protective layer and the second protective layer, and the bottom protective plate is provided with a second through-hole that extends through the first protective layer, the first protective portion, and the second protective layer.

In the foregoing solution, by disposing the first through-hole and the first protective portion, in one aspect, the first protective portion can connect the first protective layer and the second protective layer through the first through-hole; in the other aspect, the first protective portion can cover a hole wall of the first through-hole, thereby reducing the risk that the metal layer is corroded, and further improving the reliability of the battery. In addition, the second through-hole is provided, so that a connection component can pass through the second through-hole, to assemble the bottom protective plate to the bottom of the case, thereby implementing assembly between the bottom protective plate and the case.

According to some embodiments of the present application, the first through-hole extends to an outer peripheral surface of the second flange portion.

In the foregoing solution, the first protective layer and the second protective layer may be integrated through hot-press compounding. Therefore, by extending the first through-hole to an outer peripheral surface of the second flange portion of the apparatus, efficiency of hot-press compounding can be improved, and an area of hot-press compounding between the first protective layer and the second protective layer can be improved, thereby improving stability of the connection between the first protective layer and the second protective layer.

According to some embodiments of the present application, the bottom protective plate further includes a second protective portion, the second protective portion wraps the outer peripheral surface of the second flange portion, and the second protective portion connects the first protective layer and the second protective layer.

In the foregoing solution, by disposing the second protective portion, in one aspect, the first protective layer and the second protective layer can be connected to each other, thereby improving the structural stability of the bottom protective plate. In the other aspect, the second protective portion can cover the outer peripheral surface of the metal layer to reduce a risk that the metal layer is exposed and corroded.

According to some embodiments of the present application, a thickness of the second protective portion along a direction perpendicular to an outer peripheral surface of the metal layer is greater than or equal to 1 mm and less than or equal to 20 mm.

In the foregoing solution, along the direction perpendicular to the outer peripheral surface of the metal layer, the thickness of the second protective portion is set to be greater than or equal to 1 mm, so that the second protective portion can effectively cover the outer peripheral surface of the metal layer to reduce a risk that the metal layer is exposed and corroded; and the thickness of the second protective portion is set to be less than or equal to 20 mm, so that a risk that the second protective portion occupies too much space, resulting in relatively small space occupied by the metal layer and relatively low structural strength of the bottom protective plate can be reduced. Therefore, by setting the thickness of the second protective portion along the direction perpendicular to the outer peripheral surface of the metal layer to be greater than or equal to 1 mm and less than or equal to 20 mm, the anti-corrosion effect of the metal layer and the structural strength of the bottom protective plate can be both considered.

According to some embodiments of the present application, the first protective layer, the second protective layer, the first protective portion, and the second protective portion are integrally formed.

In the foregoing solution, by setting the first protective layer, the second protective layer, the first protective portion, and the second protective portion to be integrally formed, stability of the connection between the first protective layer and the second protective layer and the manufacturing efficiency of the bottom protective plate can be improved.

According to some embodiments of the present application, the second protective layer includes a third body and a third flange portion, the third flange portion is disposed around the third body, and at least a part of the third body protrudes from the third flange portion in the direction facing away from the case. The battery further includes a first connection member, the bottom protective plate is connected to the case by threading the first connection member through the third flange portion, and in the direction facing away from the case, at least a part of the third body protrudes from the first connection member.

In the foregoing solution, by disposing at least a part of the third body to protrude from the third flange portion in the direction facing away from the case, space occupied by the first connection member in the direction facing away from the case can be properly used, so as to increase a volume of the buffer cavity or an entire thickness of the bottom protective plate as much as possible, thereby improving an impact resistance capability of the bottom protective plate, and further enabling the battery to be highly reliable.

According to some embodiments of the present application, a density of the first protective layer is less than a density of the metal layer; and/or a density of the second protective layer is less than a density of the metal layer.

In the foregoing solution, by setting the density of the first protective layer and/or the second protective layer to be relatively small, a risk of a relatively large weight of the bottom protective plate caused by disposing the first protective layer and the second protective layer to have an anti-corrosion effect on the metal layer can be reduced, and influence of the bottom protective plate on the weight and the energy density of the battery can be reduced.

According to some embodiments of the present application, the first protective layer is a fiber-reinforced non-metal material layer; and/or the second protective layer is a fiber-reinforced non-metal material layer.

In the foregoing solution, by limiting the first protective layer and/or the second protective layer to a fiber-reinforced non-metal material layer, in an aspect, influence on the weight and the energy density of the battery can be reduced; in another aspect, impact resistance energy of the bottom protective plate can be effectively improved, so that the battery has relatively high reliability; and in still another aspect, the metal layer can be effectively wrapped, and a risk that the metal layer is exposed to the outside and corroded can be reduced, so that the battery has relatively high reliability.

According to some embodiments of the present application, the bottom protective plate further includes a foaming material layer, and the foaming material layer is disposed on a side of the second protective layer facing away from the metal layer.

In the foregoing solution, by disposing the foaming material layer on the outer side of the bottom protective plate, in one aspect, the foaming material has a buffering effect, thereby improving an impact resistance capability of the bottom protective plate, and in the other aspect, the foaming material has a sound-absorbing effect, that is, when the battery is applied to a vehicle, NVH (Noise, Vibration, and Harshness) performance of the vehicle can be improved, and driving experience of the vehicle can be improved.

According to a second aspect, the present application provides a power consuming apparatus, including any battery in the first aspect. The battery is configured to provide electric energy.

The above description only refers to an overview of the technical solution of the embodiments in the present application. In order to understand the technical means of the present application more clearly, it can be implemented according to the content of the description. In order to make the above-mentioned and other purposes, features and advantages of the present application more apparent, the specific implementations of the present application are listed below.

### BRIEF DESCRIPTION OF THE DRAWINGS

To describe the technical solutions of the embodiments of the present application more clearly, the following briefly describes the accompanying drawings required for describing the embodiments. It should be understood that, the following accompanying drawings show only some embodiments of the present application, which should not be considered as a limitation on the scope. A person of ordinary skill in the art may still derive other related accompanying drawings according to the accompanying drawings without creative efforts.
FIG. 1 is a schematic structural diagram of a vehicle according to some embodiments of the present application;
FIG. 2 is a three-dimensional exploded view of a battery according to some embodiments of this application;
FIG. 3 is a three-dimensional view of partial structures of a bottom protective plate and a case according to some embodiments of this application;
FIG. 4 is a schematic structural diagram of partial structures of a bottom protective plate and a case according to some embodiments of this application;
FIG. 5 is a schematic diagram of internal structures of partial structures of a bottom protective plate and a case according to some embodiments of this application;
FIG. 6 is an enlarged view at a position A in FIG. 5;
FIG. 7 is a schematic internal diagram of a partial structure of a bottom protective plate according to some other embodiments of this application;
FIG. 8 is a schematic internal diagram of a partial structure of a bottom protective plate according to some other embodiments of this application;
FIG. 9 is a three-dimensional exploded view of a bottom protective plate according to some embodiments of this application;
FIG. 10 is an enlarged view at a position B in FIG. 9;
FIG. 11 is a schematic partial diagram of an internal structure of a bottom protective plate according to some embodiments of this application;
FIG. 12 is a three-dimensional exploded view of a bottom protective plate according to some other embodiments of this application;
FIG. 13 is an enlarged view at a position C in FIG. 12;
FIG. 14 is a schematic structural diagram of a bottom protective plate according to some embodiments of the present application.

Reference numerals: 100-battery; 10-case; 11-lower case; 12-upper case; 20-battery cell; 30-bottom protective plate; 31-first protective layer; 310-first body; 311-first flange portion; 32-metal layer; 320-second body; 321-second flange portion; 3210-first through-hole; 33-second protective layer; 330-third body; 331-third flange portion; 34-first protective portion; 340-second through-hole; 35-second protective portion; 40-buffer cavity; 50-first connection member; 60-foaming material layer; 1000-vehicle; 200-controller; 300-motor.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. Apparently, the described embodiments are merely some embodiments of the present application rather than all of the embodiments. All other embodiments obtained by those of ordinary skill in the art based on the embodiments of the present application without making creative efforts shall fall within the protection scope of the present application.

Unless otherwise defined, all technical and scientific terms used in the present application have the same meanings as commonly understood by persons skilled in the technical field of the present application. The terms used in the filed specification in the present application are merely for an objective of describing specific embodiments, and are not intended to limit the present application. The terms "include", "include" and any variations thereof in the specification and claims of the present application and in the above descriptions of the accompanying drawings are intended to cover non-exclusive inclusion. The terms "first", "second" and the like in the specification and claims of the present application or the drawings are intended to distinguish different objects, and not to describe a specific order or primary-secondary relationship.

Reference herein to "an embodiment" means that a particular feature, structure, or characteristic described in connection with the embodiment can be included in at least one embodiment of the present application. Appearances of the phrase in various positions in this specification are not necessarily all referring to a same embodiment, nor are separate or alternative embodiments mutually exclusive of another embodiment.

In the description of the present application, it should be noted that unless otherwise expressly specified and defined, "mounted", "connected", "connection", and "attached" should be understood in a broad sense, for example, fixedly connected, detachably connected, or integrally connected; or connected directly or through an intermediate, or two elements communicated internally. Persons of ordinary skill in the art may understand specific meanings of the foregoing terms in the present application according to specific cases.

The term "and/or" in the present application merely describes an association relationship of associated objects, and indicates that there may be three relationships. For example, A and/or B may indicate three cases: Only A exists, both A and B exist, and only B exists. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the dimensions such as the thickness, the length, and the width of various components in the embodiments of the present application and the entire thickness, length, and width of an integrated apparatus are merely exemplary description, and should not be construed as any limitation to the present application.

"Plurality of" in the present application means two or more (including two).

The battery cell in this application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of this application. The battery cell may be cylindrical, flat-shaped, cuboid-shaped, or in another shape, which is not limited in the embodiments of the present application.

The battery mentioned in the embodiments of the present application is a single physical module including one or more battery cells to provide a higher voltage and a higher capacity. The battery generally includes a case for packaging one or more battery cells. The case can prevent a liquid or other foreign matter from affecting the charging or discharging of the battery cells.

For the electric vehicles, battery technologies are an important factor related to development of the electric vehicles. In the development of battery technology, how to improve the reliability of the batteries is an urgent technical problem to be solved in the battery technology.

A battery of an electric vehicle is generally disposed under a chassis of the whole vehicle, and the battery is exposed to the bottom of the whole vehicle for a large area. When the vehicle presses against a material such as a stone or a brick on the road surface in a traveling process, the material splashes against or collides with the bottom of the battery. In a process in which the vehicle ascends a slope, the bottom of the battery is also easy to scratch the ground. Alternatively, damage is easily caused to the bottom of the battery when the vehicle passes the speed bump or touches the curb. In addition, when the bottom of the battery is exposed to the outside for a long period of time, the battery is damaged by a strong caustic environment such as an acidic environment or an alkaline environment, and the damage may affect a normal use function of the battery pack, or even cause a safety accident such as thermal runaway or fire and explosion. In view of this, a bottom protective plate is usually disposed at the bottom of the case, to protect the bottom of the battery and protect the battery cell in the case. To take both the corrosion resistance and the impact resistance into consideration, a current bottom protective plate usually has a multi-layer structure. For example, a glass fiber layer, a metal layer, and a glass fiber layer are stacked to form a bottom protective plate.

However, the current bottom protective plate is flat, has a low impact resistance, and cannot provide effective protection for the battery cell in the case, affecting reliability of the battery.

In view of this, to alleviate a problem that an existing bottom protective plate of a multi-layer structure has low impact resistance energy and cannot effectively protect a battery cell in a case, some embodiments of this application provide a battery. The battery includes a case and a bottom protective plate. The bottom protective plate is connected to the case. The bottom protective plate is of a multi-layer structure, and a buffer cavity is formed between the bottom protective plate and the case and/or between two adjacent layers of the bottom protective plate.

In the foregoing solution, by disposing the buffer cavity, an impact on the bottom of the battery can be effectively relieved, and a risk that a battery cell in the case is damaged is reduced, so that the battery is highly reliable.

The technical solution described in this embodiment of the present application is applicable to a battery and a power consuming apparatus using the battery.

The power consuming apparatus may be a vehicle, a mobile phone, a portable device, a laptop, a ship, a spacecraft, an electric toy, a power tool, and the like. The vehicle may be a new energy vehicle. The new energy vehicle may be a pure electric vehicle, a hybrid electric vehicle, an extended range vehicle, or the like. The spacecraft includes an airplane, a rocket, a space shuttle, a spaceship and the like; the electronic toy includes a fixed or mobile electronic toy, such as a game console, an electric vehicle toy, an electric ship toy, an electric aircraft toy, and the like; and the power tool includes a metal-cutting power tool, a grinding power tool, an assembly power tool, and a railway power tool, such as an electric drill, an electric grinder, an electric wrench, an electric screwdriver, an electric hammer, an electric impact drill, a concrete vibrator, an electric planer, and the like. The foregoing power consuming apparatus is not specifically limited in the embodiments of the present application.

For ease of description, in the following embodiments, description is provided by using an example in which the power consuming apparatus is a vehicle.

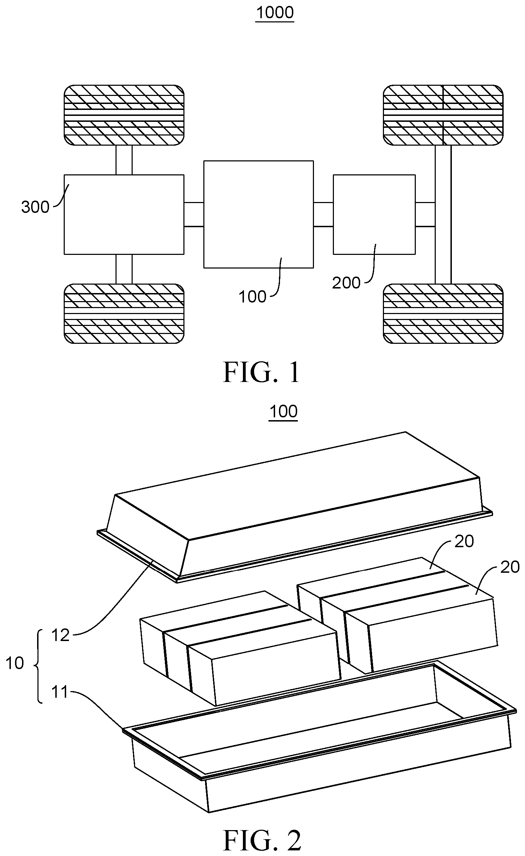

FIG. 1 is a schematic structural diagram of a vehicle according to some embodiments of the present application.

A controller 200, a motor 300 and a battery 100 may be arranged inside the vehicle 1000, and the controller 200 is configured to control the battery 100 to supply power to the motor 300. For example, the battery 100 may be arranged at the bottom, the front, or the rear of the vehicle 1000. The battery 100 may be configured to supply power to the vehicle 1000. For example, the battery 100 may be used as an operating power supply of the vehicle 1000 and used for a circuit system of the vehicle 1000, for example, may be used for operating electricity requirements during starting, navigation, and operation of the vehicle 1000. In another embodiment of this application, the battery 100 can be used not only as the operating power supply of the vehicle 1000, but also as a driving power supply of the vehicle 1000, replacing or partially replacing fuel or natural gas to provide driving power for the vehicle 1000.

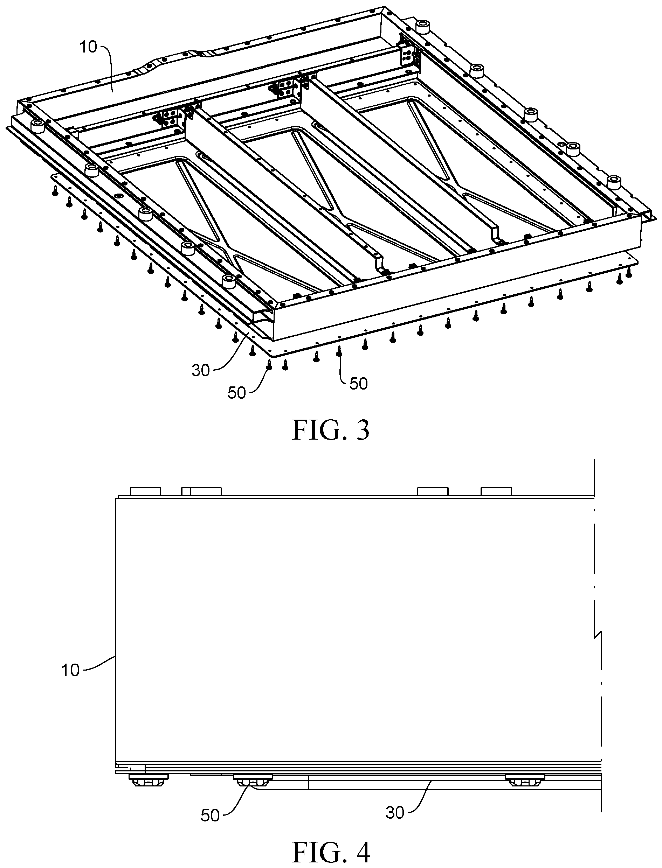

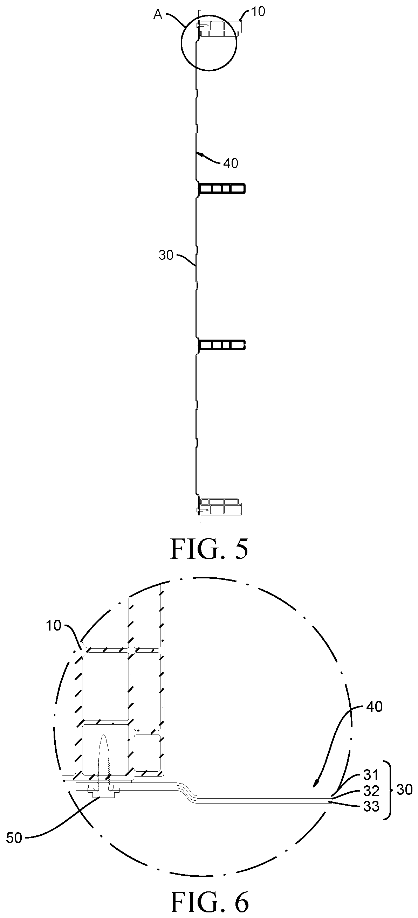

According to some embodiments of the present application, a battery 100 is provided. Referring to FIG. 2 to FIG. 6, FIG. 2 is a three-dimensional exploded view of a battery 100 according to some embodiments of this application; FIG. 3 is a three-dimensional view of partial structures of a bottom protective plate 30 and a case 10 according to some embodiments of this application; FIG. 4 is a schematic structural diagram of partial structures of a bottom protective plate 30 and a case 10 according to some embodiments of this application; FIG. 5 is a schematic diagram of internal structures of partial structures of a bottom protective plate 30 and a case 10 according to some embodiments of this application; and FIG. 6 is an enlarged view at a position A in FIG. 5.

The battery 100 includes a case 10 and a bottom protective plate 30. The bottom protective plate 30 is connected to the case 10. The bottom protective plate 30 is of a multi-layer structure, and a buffer cavity 40 is formed between the bottom protective plate 30 and the case 10 and/or between two adjacent layers of the bottom protective plate 30.

In some embodiments, the case 10 may provide a cavity for a battery cell 20, or both the case 10 and the bottom protective plate 30 provide a cavity for the battery cell 20. The case 10 may use a plurality of structures. As shown in FIG. 2, in some embodiments, the case 10 may include a lower case 11 and an upper case 12, the lower case 11 and the upper case 12 cover each other, and the lower case 11 and the upper case 12 jointly define the cavity for accommodating the battery cells 20. The lower case 11 may be a hollow structure with one end being open, the upper case 12 may be a plate-like structure, and the upper case 12 covers an open side of the lower case 11, so that the lower case 11 and the upper case 12 jointly define the cavity. Alternatively, the lower case 11 and the upper case 12 each may be a hollow structure with one side being open, and an open side of the lower case 11 covers an open side of the upper case 12. Certainly, the case 10 formed by the lower case 11 and the upper case 12 may be in various shapes, such as a cylinder, and a cuboid. In some embodiments, a connection relationship between the upper case 12 and the lower case 11 includes, but is not limited to, riveting, welding, screwing, or another connection manner. The bottom protective plate 30 may be disposed at the bottom of the lower case 11. A connection relationship between the bottom protective plate 30 and the lower case 11 includes, but is not limited to, riveting, welding, screwing, or another connection manner.

In some embodiments, the case 10 may include an upper case 12 and a lower case 11, the bottom of the lower case 11 is hollow, and the bottom protective plate 30 is disposed at the bottom of the lower case 11, so that the bottom protective plate 30, the lower case 11, and the upper case 12 jointly define the cavity for accommodating the battery cell 20. For example, referring to FIG. 3, a lower case 11 of the case 10 includes a plurality of side walls, the plurality of side walls is successively connected head to tail to form a frame, and a plurality of cross beams is disposed in the frame. The bottom protective plate 30 is disposed at a bottom of the lower case 11, and is connected to the plurality of side walls and the plurality of cross beams by using a first connection member 50.

In the battery 100, there may be one or more battery cells 20, and each battery cell 20 may be fixed to the case 10 by a connector (such as a bolt), or each battery cell 20 may be fixed to the case 10 by bonding. Electrode lead-out portions of the plurality of battery cells 20 may be connected by using a bus component.

"The bottom protective plate 30 has a multi-layer structure" may be understood as that, the bottom protective plate 30 includes a plurality of structural layers. The plurality of structural layers is stacked on each other. For example, the bottom protective plate 30 includes at least two structural layers. The at least two layers may include a metal layer 32, a non-metal layer 32, and/or another structural layer. The non-metal layer 32 and/or the another structural layer is stacked on a side of the metal layer 32 facing away from the case 10. For another example, the bottom protective plate 30 includes a three-layer structure. The three-layer structure includes a first protective layer 31, a metal layer 32, and a second protective layer 33. The metal layer 32 is sandwiched between the first protective layer 31 and the second protective layer 33. The first protective layer 31 is connected to the case 10. The first protective layer 31 and the second protective layer 33 may be used for isolating the metal layer 32 from the outside, to reduce a risk that the metal layer 32 is corroded. For still another example, the bottom protective plate 30 may alternatively be formed by stacking a plurality of layers of metal structures on one another.

The "buffer cavity 40" may be understood as a space that can allow deformation of the bottom protective plate 30 being impacted. For example, when the bottom of the battery 100 is impacted, the impact causes deformation of the bottom protective plate 30. Because a buffer is provided, a deformed part may not be in contact with another structure of the battery 100. In some embodiments, the buffer cavity 40 may be formed by increasing a distance between two structural layers, or providing a groove or a recess on a surface of a structural layer.

"A buffer cavity 40 is formed between the bottom protective plate 30 and the case 10 and/or between two adjacent layers of the bottom protective plate 30" may be understood as that, the buffer cavity 40 may be in a plurality of positions. One possible solution is that, the buffer cavity 40 is disposed between the bottom protective plate 30 and the case 10. For example, referring to FIG. 6, a surface of the bottom protective plate 30 facing the case 10 is recessed to an outer side of the case 10, and the buffer cavity 40 is formed between the recessed part and a connecting surface of the case 10 and the bottom protective plate 30. Another possible solution is that the buffer cavity 40 is formed inside the bottom protective plate 30. For example, the bottom protective plate 30 includes a three-layer structure, and the three-layer structure includes a first protective layer 31, a metal layer 32, and a second protective layer 33. The buffer cavity 40 is formed between the first protective layer 31 and the metal layer 32 or between the metal layer 32 and the second protective layer 33.

In the foregoing solution, by disposing the buffer cavity 40, an impact on the bottom of the battery 100 can be effectively relieved, and a risk that a battery cell 20 in the case 10 is damaged is reduced, so that the battery 100 is highly reliable.

According to some embodiments of the present application, the bottom protective plate 30 includes a first protective layer 31, a metal layer 32, and a second protective layer 33 that are stacked, the first protective layer 31 is disposed on a side of the metal layer 32 close to the case 10, and the second protective layer 33 is disposed on a side of the metal layer 32 facing away from the case 10.

In some embodiments, the bottom protective plate 30 may have a three-layer structure. The three-layer structure includes a first protective layer 31, a metal layer 32, and a second protective layer 33. A material of the metal layer 32 includes, but is not limited to, a material such as steel, aluminum, or an aluminum alloy. In some embodiments, the metal layer 32 may be made of a metal material that is relatively rigid and that should be ductile. The first protective layer 31 and the second protective layer 33 may be made of a non-metal material. The first protective layer 31 and the second protective layer 33 may have certain structural strength, which, in one aspect, can effectively prevent damage such as impact of crushed stones at the bottom, and in the other aspect, can reduce the risk that the internal metal layer 32 is corroded by the external environment. Exemplarily, the first protective layer 31 and the second protective layer 33 may be composite material layers. For example, a manufacturing material of the first protective layer 31 and the second protective layer 33 includes a fiber-reinforced non-metal material. A matrix resin of the first protective layer 31 and the second protective layer 33 may be a thermoplastic resin such as polypropylene (PP) or polyamide (PA), or may be a thermosetting resin such as an epoxy resin or polyurethane. The fiber may be a glass fiber, a carbon fiber, a basalt fiber, or the like.

In some embodiments, sizes of the first protective layer 31, the metal layer 32, and the second protective layer 33 may be the same or may be different. For example, the size of the metal layer 32 is less than the sizes of the first protective layer 31 and the second protective layer 33, and the metal layer 32 is sandwiched between the first protective layer 31 and the second protective layer 33, that is, an outer edge of the metal layer 32 can be isolated from the outside.

The first protective layer 31 is a structural layer closest to the case 10 in the three-layer structure of the bottom protective plate 30, and the second protective layer 33 is a structural layer farthest away from the case 10 in the three-layer structure of the bottom protective plate 30. In some embodiments, a relationship between the bottom protective plate 30 and the case 10 includes that the first protective layer 31 is bonded, snap-fit, or riveted to the case 10, or a connection component is threaded through the second protective layer 33, the metal layer 32, and the first protective layer 31 and connected to the case 10, or a connection component is threaded through the second protective layer 33 and the first protective layer 31 and connected to the case 10.

In the foregoing solution, the metal layer 32 has a relatively high strength, and can provide effective protection for the battery cell 20 in the case 10. By disposing the metal layer 32 between the first protective layer 31 and the second protective layer 33, a risk that the metal layer 32 is exposed to the outside and is corroded can be effectively reduced, so that the bottom protective plate 30 has relatively high reliability, thereby improving reliability of the battery 100.

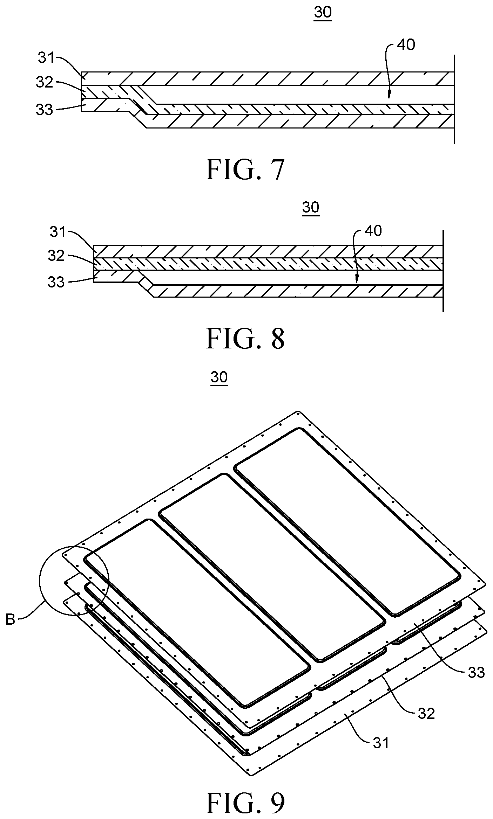

According to some embodiments of the present application, referring to FIG. 6 to FIG. 8, FIG. 7 is a schematic internal diagram of a partial structure of a bottom protective plate 30 according to some other embodiments of this application; and FIG. 8 is a schematic internal diagram of a partial structure of a bottom protective plate 30 according to some other embodiments of this application.
at least one of the following conditions is met:
the buffer cavity 40 is formed between the first protective layer 31 and the case 10;
the buffer cavity 40 is formed between the first protective layer 31 and the metal layer 32; and
the buffer cavity 40 is formed between the metal layer 32 and the second protective layer 33.

In some embodiments, referring to FIG. 6, "the buffer cavity 40 is formed between the first protective layer 31 and the case 10" may be understood as that, grooves or recesses are provided at one or more positions on a surface of the first protective layer 31 facing away from the metal layer 32 to form at least a part of the buffer cavity 40 between the first protective layer 31 and the case 10. For example, three spaced recesses may be disposed on the surface of the first protective layer 31 facing away from the metal layer 32. When the bottom protective plate 30 is impacted and deformed, the three recesses can accommodate a deformed part of the bottom protective plate 30, to reduce an impact of the deformed part on the battery cell 20. For example, a recess may be formed on the surface of the first protective layer 31 facing away from the metal layer 32 through stamping, and a protrusion may be formed on the surface of the first protective layer facing the metal layer 32 at a position corresponding to the recess.

In some other embodiments, referring to FIG. 7, "the buffer cavity 40 is formed between the first protective layer 31 and the metal layer 32" may be understood as that, there is a gap between the first protective layer 31 and the metal layer 32. The gap may form at least a part of the buffer cavity 40, to accommodate a part of the bottom protective plate 30 that is deformed under an impact, so as to reduce an impact of the deformed part on the battery cell 20. For example, forming at least a part of the buffer cavity 40 may include, but is not limited to, disposing a groove or a recess on a surface of the first protective layer 31 facing the metal layer 32, and disposing a groove or a recess on a surface of the metal layer 32 facing the first protective layer 31.

In some other embodiments, referring to FIG. 8, "the buffer cavity 40 is formed between the metal layer 32 and the second protective layer 33" may be understood as that, there is a gap between the metal layer 32 and the second protective layer 33. The gap may form at least a part of the buffer cavity 40, to accommodate a part of the bottom protective plate 30 that is deformed under an impact, so as to reduce an impact of the deformed part on the battery cell 20. For example, forming at least a part of the buffer cavity 40 may include, but is not limited to, disposing a groove or a recess on a surface of the second protective layer 33 facing the metal layer 32, and disposing a groove or a recess on a surface of the metal layer 32 facing the second protective layer 33.

In some embodiments, a groove or a recess may be formed on a surface of the first protective layer 31 facing away from the metal layer 32, a gap may be formed between the first protective layer 31 and the metal layer 32, and a gap may be formed between the metal layer 32 and the second protective layer 33, so that the buffer cavity 40 has a part located between the first protective layer 31 and the case 10, a part located between the first protective layer 31 and the metal layer 32, and a remaining part located between the metal layer 32 and the second protective layer 33.

In the foregoing solution, various positions for arranging the buffer cavity 40 are provided, which can provide various options for manufacturing of the battery 100 and adapt to different impact situations. For example, the buffer cavity 40 is disposed between the first protective layer 31 and the case 10, so that after the second protective layer 33, the metal layer 32, and the first protective layer 31 absorb an impact first, the buffer cavity 40 is used for energy absorption during collapse and deformation. Therefore, when a relatively small impact situation is encountered, a risk that the entire bottom protective plate 30 is scraped because the buffer cavity 40 is broken or broken into pieces can be reduced. For example, the buffer cavity 40 is disposed between the metal layer 32 and the second protective layer 33, so that impact can be absorbed at an outer position of the battery 100, and influence of the impact on the internal structure of the case 10 can be effectively reduced.

In the foregoing solution, various positions for arranging the buffer cavity 40 are provided, which can provide various options for manufacturing of the battery 100 and adapt to different impact situations. For example, the buffer cavity 40 is disposed between the first protective layer 31 and the case 10, so that after the second protective layer 33, the metal layer 32, and the first protective layer 31 absorb an impact first, the buffer cavity 40 is used for energy absorption during collapse and deformation. Therefore, when a relatively small impact situation is encountered, a risk that the entire bottom protective plate 30 is scraped because the buffer cavity 40 is broken or broken into pieces can be reduced. For example, the buffer cavity 40 is disposed between the metal layer 32 and the second protective layer 33, so that impact can be absorbed at an outer position of the battery 100, and influence of the impact on the internal structure of the case 10 can be effectively reduced.

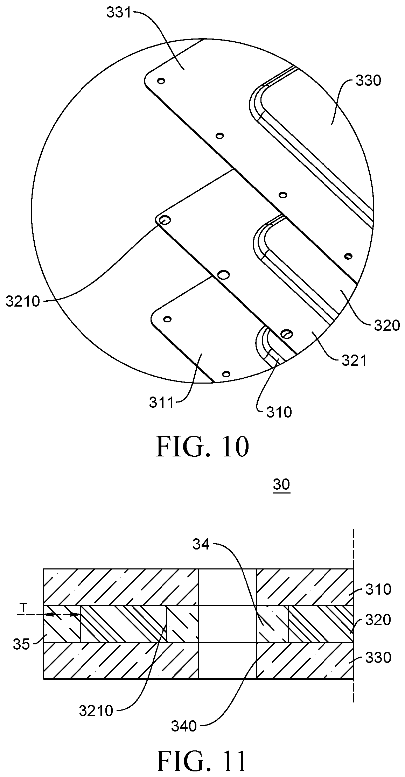

According to some embodiments of the present application, referring to FIG. 6, FIG. 9, and FIG. 10, FIG. 9 is a three-dimensional exploded view of a bottom protective plate 30 according to some embodiments of this application; and FIG. 10 is an enlarged view at a position B in FIG. 9.

The first protective layer 31 includes a first body 310 and a first flange portion 311, the first flange portion 311 is disposed around the first body 310, and the first flange portion 311 is connected to the case 10. At least a part of the first body 310 protrudes from the first flange portion 311 in a direction facing away from the case 10, and the buffer cavity 40 is formed between the first body 310 and the case 10.

In some embodiments, the first protective layer 31 includes a first body 310 and a first flange portion 311, the first flange portion 311 is disposed around an outer edge of the first body 310, and the first flange portion 311 is connected to the case 10. For example, the first flange portion 311 is connected to the case 10 by using a bolt.

"At least a part of the first body 310 protrudes from the first flange portion 311 in a direction facing away from the case 10" may be understood as that, some or all of the first body 310 protrudes from the first flange portion 311 in a direction facing away from the case 10, so that a groove or recess that is lower than a plane at which the first flange portion 311 is located is formed on a surface of the first body 310 facing the case 10, and the buffer cavity 40 can be formed between the first protective layer 31 and the case 10. Meanwhile, a convex portion is formed at a corresponding position on the surface of the first body 310 facing away from the case 10. For example, there may be three parts of the first body 310 that protrude from the first flange portion 311 in a direction facing away from the case 10. That is, three grooves or recesses are formed on the surface of the first body 310 facing the case 10, and three convex portions are formed at corresponding positions on the surface of the first body 310 facing away from the case 10.

According to the foregoing solution, the first protective layer 31 has a simple structure, and can be effectively connected to the case 10 by using the first flange portion 311. By disposing at least a part of the first body 310 to protrude toward a side facing away from the case 10, a recessed region can be formed on a side facing the case 10, so as to form a buffer cavity 40 between the case 10 and the first protective layer 31, thereby relieving impact on the bottom of the battery 100, and enabling the battery 100 to have relatively high reliability.

According to some embodiments of the present application, referring to FIG. 6, FIG. 9, and FIG. 10, the metal layer 32 includes a second body 320 and a second flange portion 321, the second flange portion 321 is disposed around the second body 320, at least a part of the second body 320 protrudes from the second flange portion 321 in the direction facing away from the case 10, the second body 320 is attached to the first body 310, and the second flange portion 321 is attached to the first flange portion 311.

In some embodiments, an outer contour of the metal layer 32 may be disposed corresponding to an outer contour of the first protective layer 31. The second body 320 of the metal layer 32 is disposed corresponding to the first body 310 of the first protective layer 31, and the second flange portion 321 of the metal layer 32 is disposed corresponding to the first flange portion 311 of the first protective layer 31.

"At least a part of the second body 320 protrudes from the second flange portion 321 in a direction facing away from the case 10" may be understood as that, some or all of the second body 320 protrudes from the second flange portion 321 in a direction facing away from the case 10, so that a groove or recess that is lower than a plane at which the second flange portion 321 is located is formed on a surface of the second body 320 facing the case 10, to accommodate the convex portion of the first body 310.

"The second body 320 is attached to the first body 310, and the second flange portion 321 is attached to the first flange portion 311" may be understood that, a surface of the metal layer 32 facing the first protective layer 31 and a surface of the first protective layer 31 facing the metal layer 32 are attached to each other.

In some embodiments, the metal layer 32 and the first protective layer 31 may be integrally connected through bonding, snap-fit, or the like. In some embodiments, the metal layer 32 may be sandwiched between the first protective layer 31 and the second protective layer 33. The first protective layer 31 and the second protective layer 33 are connected to each other, so that the metal layer 32 is stably located between the first protective layer 31 and the second protective layer 33.

In the foregoing solution, an outer contour of the metal layer 32 may fit with an outer contour of the first protective layer 31, and the metal layer 32 includes a second flange portion 321 corresponding to the first flange portion 311, and a second body 320 corresponding to the first body 310. The metal layer 32 and the first protective layer 31 can be closely attached to each other, and the bottom protective plate 30 can have a stable structure and high space utilization, so that space utilization of the battery 100 is high, facilitating improvement in the volumetric energy density of the battery 100.

In some other embodiments, the second flange portion 321 may be omitted for the metal layer 32. For example, the metal layer 32 only has a flat plate-shaped structure, and the metal layer 32 is sandwiched between the first protective layer 31 and the second protective layer 33.

According to some embodiments of the present application, referring to FIG. 6, FIG. 9, and FIG. 10, the second protective layer 33 includes a third body 330 and a third flange portion 331, the third flange portion 331 is disposed around the third body 330, at least a part of the third body 330 protrudes from the third flange portion 331 in the direction facing away from the case 10, the second body 320 is sandwiched between the first body 310 and the third body 330, and the second flange portion 321 is sandwiched between the first flange portion 311 and the third flange portion 331.

In some embodiments, an outer contour of the second protective layer 33 may be disposed corresponding to outer contours of the first protective layer 31 and the metal layer 32. The third body 330 of the second protective layer 33 is disposed corresponding to the second body 320 of the metal layer 32, so that the second body 320 is sandwiched between the third body 330 and the first body 310. The third flange portion 331 of the second protective layer 33 is disposed corresponding to the second flange portion 321 of the metal layer 32, so that the second flange portion 321 is sandwiched between the third flange portion 331 and the first flange portion 311.

"At least a part of the third body 330 protrudes from the third flange portion 331 in a direction facing away from the case 10" may be understood as that, some or all of the third body 330 protrudes from the third flange portion 331 in a direction facing away from the case 10, so that a groove or recess that is lower than a plane at which the third flange portion 331 is located is formed on a surface of the third body 330 facing the case 10, to accommodate the convex portion of the second body 320.

For example, referring to FIG. 9, there are three convex portions on the surface of the third body 330 facing away from the metal layer 32, and recesses corresponding to the three convex portions can accommodate three convex portions of the second body 320. Similarly, three recesses formed on the surface of the second body 320 facing the first body 310 can accommodate three convex portions of the first body 310, and three recesses are formed on the surface of the first body 310 facing the case 10.

In some embodiments, the bottom protective plate 30 may be connected to the case 10 by using a bolt, and the bolt may be threaded through the third flange portion 331, the second flange portion 321, and the first flange portion 311 and connected to the case 10.

In the foregoing solution, the outer contour of the metal layer 32 may fit with the outer contour of the first protective layer 31 and the outer contour of the metal layer 32. By disposing the third body 330 attached to the second body 320 and the third flange portion 331 attached to the second flange portion 321, in one aspect, the bottom protective plate 30 can have a stable structure and high space utilization, so that space utilization of the battery 100 is high, facilitating improvement in the volumetric energy density of the battery 100. In the other aspect, the metal layer 32 can be stably located between the first protective layer 31 and the second protective layer 33, thereby reducing a risk that the metal layer 32 is corroded and improving reliability of the battery 100.

In some other embodiments, the third protective layer may have a flat plate shape as a whole, a groove may be formed on a surface of the third protective layer facing the metal layer 32, and the groove can accommodate the first body 310 and the second body 320.

According to some embodiments of the present application, referring to FIG. 10 and FIG. 11, FIG. 11 is a schematic partial diagram of an internal structure of a bottom protective plate 30 according to some embodiments of this application.

The second flange portion 321 is provided with a first through-hole 3210, the bottom protective plate 30 further includes a first protective portion 34, the first protective portion 34 is disposed in the first through-hole 3210 and connects the first protective layer 31 and the second protective layer 33, and the bottom protective plate 30 is provided with a second through-hole 340 that extends through the first protective layer 31, the first protective portion 34, and the second protective layer 33.

In some embodiments, the second flange portion 321 is provided with a first through-hole 3210 along a stacking direction of the first protective layer 31, the metal layer 32, and the second protective layer 33, and the first protective portion 34 is disposed in the first through-hole 3210 to connect the first protective layer 31 and the second protective layer 33. For example, during manufacturing of the bottom protective plate 30, the first protective layer 31, the metal layer 32, and the second protective layer 33 are stacked into one piece. Through hot-press compounding, the first protective layer 31 and the second protective layer 33 are blended into one piece at a part corresponding to the first through-hole 3210. The blended part may be the first protective portion 34. In some other embodiments, the first protective portion 34 may have a bonding structure or a welding structure. During manufacturing of the bottom protective plate 30, the first protective layer 31, the metal layer 32, and the second protective layer 33 are stacked into one piece. The first protective portion 34 is formed through bonding or welding at a part corresponding to the first through-hole 3210 and connects the first protective layer 31 and the second protective layer 33.

The second through-hole 340 is a hole-shaped structure passing through the first protective layer 31, the first protective portion 34, and the second protective layer 33. In some embodiments, the bottom protective plate 30 is connected to the case 10 by threading a bolt through the second through-hole 340.

In some embodiments, the second through-hole 340 may be circular, square, or of another shape. The first through-hole 3210 may be circular, square, or of another shape.

In some embodiments, a hole diameter of the second through-hole 340 may be less than a hole diameter of the first through-hole 3210, so that a hole wall of the first through-hole 3210 can be effectively covered by the first protective portion 34.

In the foregoing solution, by disposing the first through-hole 3210 and the first protective portion 34, in one aspect, the first protective portion 34 can connect the first protective layer 31 and the second protective layer 33 through the first through-hole 3210; in the other aspect, the first protective portion 34 can cover a hole wall of the first through-hole 3210, thereby reducing the risk that the metal layer 32 is corroded, and further improving the reliability of the battery 100. In addition, the second through-hole 340 is provided, so that a connection component (such as a bolt or a screw) can pass through the second through-hole 340, to assemble the bottom protective plate 30 to the bottom of the case 10, thereby implementing assembly between the bottom protective plate 30 and the case 10.

In some other embodiments, the second body 320 may form a through-hole, and the first body 310 and the third body 330 may be connected to each other through the through-hole.

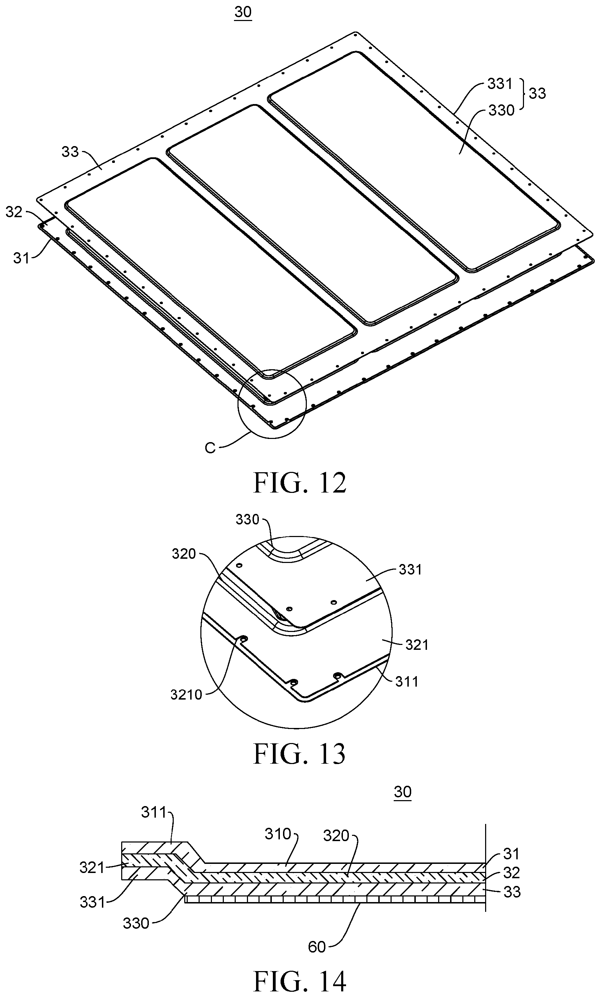

According to some other embodiments of this application, referring to FIG. 12 and FIG. 13, FIG. 12 is a three-dimensional exploded view of a bottom protective plate 30 according to some other embodiments of this application; and FIG. 13 is an enlarged view at a position C in FIG. 12.

The first through-hole 3210 extends to an outer peripheral surface of the second flange portion 321.

In some embodiments, the first through-hole 3210 may be a U-shaped hole, that is, the first through-hole 3210 has an opening. Alternatively, an outer edge of the second flange portion 321 is sunken inward to form the first through-hole 3210.

In some embodiments, the bottom protective plate 30 may be connected to the case 10 by threading a bolt through the second through-hole 340. The first through-hole 3210 extends to an outer peripheral surface of the second flange portion 321. Therefore, during locking, the bolt can compress the first protective layer 31 and the second protective layer 33 at a part at the opening of the first through-hole 3210, so that the first protective layer 31 and the second protective layer 33 deform, thereby improving sealing performance of the locking.

In the foregoing solution, the first protective layer 31 and the second protective layer 33 may be integrated through hot-press compounding. Therefore, by extending the first through-hole 3210 to an outer peripheral surface of the second flange portion 321 of the apparatus, efficiency of hot-press compounding can be improved, and an area of hot-press compounding between the first protective layer 31 and the second protective layer 33 can be improved, thereby improving stability of the connection between the first protective layer 31 and the second protective layer 33.

According to some embodiments of the present application, referring to FIG. 11, the bottom protective plate 30 further includes a second protective portion 35, the second protective portion 35 wraps the outer peripheral surface of the second flange portion 321, and the second protective portion 35 connects the first protective layer 31 and the second protective layer 33.

In some embodiments, a size of the metal layer 32 may be less than a size of a first protective member and a size of a second protective member. For example, there is a spacing between an outer peripheral surface of the second flange portion 321 of the metal layer 32 and each of an outer peripheral surface of the first flange portion 311 and an outer peripheral surface of the third flange portion 331. The spacing may be set for the second protective member. The second protective member is disposed along an entire outer peripheral surface of the second flange portion 321 and connects the first protective layer 31 and the second protective layer 33. For example, during manufacturing of the bottom protective plate 30, the first protective layer 31, the metal layer 32, and the second protective layer 33 are stacked into one piece. During a process of hot-press compounding, the first protective layer 31 and the second protective layer 33 have relatively large sizes. A region in which the first protective layer 31 and the second protective layer 33 are not supported exists on an outer side of the metal layer 32. The first protective layer 31 and the second protective layer 33 are blended into one piece in the region, and the blended part may form the second protective portion 35. In some other embodiments, the second protective portion 35 may have a bonding structure or a welding structure. During manufacturing of the bottom protective plate 30, the first protective layer 31, the metal layer 32, and the second protective layer 33 are stacked into one piece. The second protective portion 35 is formed through bonding or welding at an outer periphery of the metal layer 32 and connects the first protective layer 31 and the second protective layer 33.

According to some embodiments of the present application, a thickness of the second protective portion 35 along a direction perpendicular to an outer peripheral surface of the metal layer 32 is greater than or equal to 1 mm and less than or equal to 20 mm.

Referring to FIG. 11, a thickness of the second protective portion 35 along a direction perpendicular to an outer peripheral surface of the metal layer 32 is marked as T, and a value of T is greater than or equal to 1 mm and less than or equal to 20 mm.

In some embodiments, a value of T may be 1 mm, 2 mm, 3 mm, 4 mm, 5 mm, ..., 18 mm, 19 mm, 20 mm, or any value between two adjacent values.

In the foregoing solution, along the direction perpendicular to the outer peripheral surface of the metal layer 32, the thickness of the second protective portion 35 is set to be greater than or equal to 1 mm, so that the second protective portion 35 can effectively cover the outer peripheral surface of the metal layer 32 to reduce a risk that the metal layer 32 is exposed and corroded; and the thickness of the second protective portion 35 is set to be less than or equal to 20 mm, so that a risk that the second protective portion 35 occupies too much space, resulting in relatively small space occupied by the metal layer 32 and relatively low structural strength of the bottom protective plate 30 can be reduced. Therefore, by setting the thickness of the second protective portion 35 along the direction perpendicular to the outer peripheral surface of the metal layer 32 to be greater than or equal to 1 mm and less than or equal to 20 mm, the anti-corrosion effect of the metal layer 32 and the structural strength of the bottom protective plate 30 can be both considered.

According to some embodiments of the present application, the first protective layer 31, the second protective layer 33, the first protective portion 34, and the second protective portion 35 are integrally formed.

In some embodiments, the first protective layer 31 and the second protective layer 33 may be combined into one piece through hot-press compounding. For example, during manufacturing of the bottom protective plate 30, the first protective layer 31, the metal layer 32, and the second protective layer 33 are stacked into one piece. A high-temperature environment and a certain pressure are provided for the first protective layer 31, the metal layer 32, and the second protective layer 33, so that the first protective portion 34 and the second protective portion 35 are formed between the first protective layer 31 and the second protective layer 33.

In the foregoing solution, by setting the first protective layer 31, the second protective layer 33, the first protective portion 34, and the second protective portion 35 to be integrally formed, stability of the connection between the first protective layer 31 and the second protective layer 33 and the manufacturing efficiency of the bottom protective plate 30 can be improved.

According to some embodiments of the present application, with reference to FIG. 4 and FIG. 6, the second protective layer 33 includes a third body 330 and a third flange portion 331, the third flange portion 331 is disposed around the third body 330, and at least a part of the third body 330 protrudes from the third flange portion 331 in the direction facing away from the case 10. The battery 100 further includes a first connection member 50, the bottom protective plate 30 is connected to the case 10 by threading the first connection member 50 through the third flange portion 331, and in the direction facing away from the case 10, at least a part of the third body 330 protrudes from the first connection member 50.

In some embodiments, the bottom protective plate 30 is connected to the case 10 by threading the first connection member 50 through the bottom protective plate 30. For example, the first connection member 50 may be a bolt. One part of the bolt may be located in the bottom protective plate 30 and the case 10, and the other part of the bolt is located on a side of the bottom protective plate 30 facing away from the case 10.

The third body 330 is a part of the third protective layer. The third flange portion 331 is disposed around the third body 330. The third flange portion 331 is provided for the first connection member 50 to pass through, that is, a part of the first connection part can protrude from a surface of the third flange portion 331 facing away from the case 10.

All or a part of the third body 330 can protrude from the third flange portion 331, and a size of the part protruding from the third flange portion 331 may be greater than or equal to a size of the first connection portion protruding from the third flange portion 331.

In the foregoing solution, by disposing at least a part of the third body 330 to protrude from the third flange portion 331 in the direction facing away from the case 10, space occupied by the first connection member 50 in the direction facing away from the case 10 can be properly used, so as to increase a volume of the buffer cavity 40 or an entire thickness of the bottom protective plate 30 as much as possible, thereby improving an impact resistance capability of the bottom protective plate 30, and further enabling the battery 100 to be highly reliable.

According to some embodiments of the present application, a density of the first protective layer 31 is less than a density of the metal layer 32; and/or a density of the second protective layer 33 is less than a density of the metal layer 32.

In some embodiments, the sealing of the first protective layer 31 and/or the second protective layer 33 may be less than the density of the metal layer 32. For example, the first protective layer 31 and/or the second protective layer 33 may be made of ceramic, carbon fiber, or another material having a relatively low density.

In the foregoing solution, by setting the density of the first protective layer 31 and/or the second protective layer 33 to be relatively small, a risk of a relatively large weight of the bottom protective plate 30 caused by disposing the first protective layer 31 and the second protective layer 33 to have an anti-corrosion effect on the metal layer 32 can be reduced, and influence of the bottom protective plate 30 on the weight and the energy density of the battery 100 can be reduced.

According to some embodiments of the present application, the first protective layer 31 is a fiber-reinforced non-metal material layer; and/or the second protective layer 33 is a fiber-reinforced non-metal material layer.

In some embodiments, the first protective layer 31 and/or the second protective layer 33 is made of a fiber-reinforced non-metal material, whose matrix resin may be a thermoplastic resin such as PP or PA, or may be a thermosetting resin such as an epoxy resin or polyurethane. The fiber may be a glass fiber, a carbon fiber, a basalt fiber, or the like.

In the foregoing solution, by limiting the first protective layer 31 and/or the second protective layer 33 to a fiber-reinforced non-metal material layer, in an aspect, influence on the weight and the energy density of the battery 100 can be reduced; in another aspect, impact resistance energy of the bottom protective plate 30 can be effectively improved, so that the battery 100 has relatively high reliability; and in still another aspect, the metal layer 32 can be effectively wrapped, and a risk that the metal layer 32 is exposed to the outside and corroded can be reduced, so that the battery 100 has relatively high reliability.

According to some other embodiments of this application, referring to FIG. 14, FIG. 14 is a schematic structural diagram of a bottom protective plate 30 according to some embodiments of the present application.
the bottom protective plate 30 further includes a foaming material layer 60, and the foaming material layer 60 is disposed on a side of the second protective layer 33 facing away from the metal layer 32.

In some embodiments, the foaming material layer 60 may include a material such as a polyvinyl chloride (PVC) foaming material or a polyurethane foaming material.

The foaming material layer 60 may be disposed on a side of the second protective layer 33 facing away from the metal layer 32 through bonding or hot-press compounding.

In the foregoing solution, by disposing the foaming material layer 60 on the outer side of the bottom protective plate 30, in one aspect, the foaming material has a buffering effect, thereby improving an impact resistance capability of the bottom protective plate 30, and in the other aspect, the foaming material has a sound-absorbing effect, that is, when the battery 100 is applied to a vehicle, NVH (Noise, Vibration, and Harshness) performance of the vehicle can be improved, and driving experience of the vehicle can be improved.

According to some embodiments of the present application, a power consuming apparatus is provided. The power consuming apparatus includes the battery 100 provided above, and the battery 100 is used for providing electrical energy.

In some embodiments, the power consuming apparatus may include a vehicle, and the battery 100 may be disposed under a chassis of the vehicle.

According to some embodiments of the present application, a battery 100 is provided, referring to FIG. 2 to FIG. 13.

The battery 100 includes a case 10 and a bottom protective plate 30. The bottom protective plate 30 is disposed at the bottom of the case 10. The bottom protective plate 30 has a multi-layer structure, and includes a first protective layer 31, a metal layer 32, and a second protective layer 33 that are stacked. The first protective layer 31 and the second protective layer 33 are fiber-reinforced non-metal material layers.

The first protective layer 31 includes a first body 310 and a first flange portion 311, the first flange portion 311 is disposed around the first body 310, and the first flange portion 311 is connected to the case 10. At least a part of the first body 310 protrudes from the first flange portion 311 in a direction facing away from the case 10. the metal layer 32 includes a second body 320 and a second flange portion 321, the second flange portion 321 is disposed around the second body 320, at least a part of the second body 320 protrudes from the second flange portion 321 in the direction facing away from the case 10, the second body 320 is attached to the first body 310, and the second flange portion 321 is attached to the first flange portion 311. the second protective layer 33 includes a third body 330 and a third flange portion 331, the third flange portion 331 is disposed around the third body 330, at least a part of the third body 330 protrudes from the third flange portion 331 in the direction facing away from the case 10, the second body 320 is sandwiched between the first body 310 and the third body 330, and the second flange portion 321 is sandwiched between the first flange portion 311 and the third flange portion 331.

A recess is formed on a surface of the first body 310 facing the case 10, so that a buffer cavity 40 is formed between the bottom protective plate 30 and the case 10. The buffer cavity 40 can relieve an impact on the bottom protective plate 30, thereby reducing an influence of the impact on a structural member (for example, the battery cell 20) in the case 10. A position of the recess corresponds to a position at which the first body 310 protrudes from the first flange portion 311 in the direction facing away from the case 10.

The second flange portion 321 of the metal layer 32 is provided with a first through-hole 3210, and the first through-hole 3210 extends to an outer peripheral surface of the second flange portion 321. The size of the metal layer 32 is less than the size of the first protective layer 31 and the size of the second protective layer 33. The first protective layer 31 and the second protective layer 33 are integrated through hot-press compounding, and a first protective portion 34 and a second protective portion 35 are formed at a position corresponding to the first through-hole 3210 and a position around an outer periphery of the metal layer 32. The first protective portion 34 is provided with a second through-hole 340, and a bolt is threaded through the second through-hole 340 and connected to the case 10, to connect the bottom protective plate 30 to the case 10.

In the foregoing solution, by disposing the buffer cavity 40, an impact on the bottom of the battery 100 can be effectively relieved, and a risk that a battery cell 20 in the case 10 is damaged is reduced, so that the battery 100 is highly reliable.

The foregoing descriptions are merely exemplary embodiments of the present application, but are not intended to limit the present application. Persons skilled in the art may make various modifications and changes to the present application. Any modification, equivalent replacement, or improvement made within the spirit and principle of the present application shall fall within the protection scope of the present application.

## Claims

1. A battery, comprising:
a case; and
a bottom protective plate, wherein the bottom protective plate is connected to the case; and
the bottom protective plate is of a multi-layer structure, and a buffer cavity is formed between the bottom protective plate and the case and/or between two adjacent layers of the bottom protective plate.

2. The battery according to claim 1, wherein
the bottom protective plate comprises a first protective layer, a metal layer, and a second protective layer that are stacked, the first protective layer is disposed on a side of the metal layer close to the case, and the second protective layer is disposed on a side of the metal layer facing away from the case.

3. The battery according to claim 2, wherein
at least one of the following conditions is met:
the buffer cavity is formed between the first protective layer and the case;
the buffer cavity is formed between the first protective layer and the metal layer; and
the buffer cavity is formed between the metal layer and the second protective layer.

4. The battery according to claim 2 or 3, wherein
the first protective layer comprises a first body and a first flange portion, the first flange portion is disposed around the first body, and the first flange portion is connected to the case; and
at least a part of the first body protrudes from the first flange portion in a direction facing away from the case, and the buffer cavity is formed between the first bod and the case.

5. The battery according to claim 4, wherein
the metal layer comprises a second body and a second flange portion, the second flange portion is disposed around the second body, at least a part of the second body protrudes from the second flange portion in the direction facing away from the case, the second body is attached to the first body, and the second flange portion is attached to the first flange portion.

6. The battery according to claim 5, wherein
the second protective layer comprises a third body and a third flange portion, the third flange portion is disposed around the third body, at least a part of the third body protrudes from the third flange portion in the direction facing away from the case, the second body is sandwiched between the first body and the third body, and the second flange portion is sandwiched between the first flange portion and the third flange portion.

7. The battery according to claim 6, wherein
the second flange portion is provided with a first through-hole, the bottom protective plate further comprises a first protective portion, the first protective portion is disposed in the first through-hole and connects the first protective layer and the second protective layer, and the bottom protective plate is provided with a second through-hole that extends through the first protective layer, the first protective portion, and the second protective layer.

8. The battery according to claim 7, wherein
the first through-hole extends to an outer peripheral surface of the second flange portion.

9. The battery according to claim 7 or 8, wherein
the bottom protective plate further comprises a second protective portion, the second protective portion wraps the outer peripheral surface of the second flange portion, and the second protective portion connects the first protective layer and the second protective layer.

10. The battery according to claim 9, wherein
a thickness of the second protective portion along a direction perpendicular to an outer peripheral surface of the metal layer is greater than or equal to 1 mm and less than or equal to 20 mm.

11. The battery according to claim 9 or 10, wherein
the first protective layer, the second protective layer, the first protective portion, and the second protective portion are integrally formed.

12. The battery according to any one of claims 2 to 11, wherein
the second protective layer comprises a third body and a third flange portion, the third flange portion is disposed around the third body, and at least a part of the third body protrudes from the third flange portion in the direction facing away from the case; and
the battery further comprises a first connection member, the bottom protective plate is connected to the case by threading the first connection member through the third flange portion, and in the direction facing away from the case, at least a part of the third body protrudes from the first connection member.

13. The battery according to any one of claims 2 to 12, wherein
a density of the first protective layer is less than a density of the metal layer; and/or
a density of the second protective layer is less than a density of the metal layer.

14. The battery according to any one of claims 2 to 13, wherein
the first protective layer is a fiber-reinforced non-metal material layer; and/or
the second protective layer is a fiber-reinforced non-metal material layer.

15. The battery according to any one of claims 2 to 14, wherein
the bottom protective plate further comprises a foaming material layer, and the foaming material layer is disposed on a side of the second protective layer facing away from the metal layer.

16. A power consuming apparatus, comprising the battery according to any one of claims 1 to 15, wherein the battery is configured to provide electric energy.
